# EUROPÄISCHE PATENTSCHRIFT

(11) **EP 1 156 400 B1**
(45) Veröffentlichungstag und Bekanntmachung des Hinweises auf die Patenterteilung: **28.03.2007**
(21) Anmeldenummer: 01110913.9
(22) Anmeldetag: 05.05.2001
(51) Int. Cl.: G03G 15/23

(54) **Verfahren zur Einstellung des Registers für deckunsgleichen Schön- und Widerdruck bei einer Mehrfarbendruckmaschine**
Method for adjusting the register to congruent perfecting of a multicolor printing press
Procédé pour régler le registre de l'impression recto-verso coincidente d'une presse impression polychrome

(30) Priorität: 17.05.2000 US 204848 P
(43) Veröffentlichungstag der Anmeldung: 21.11.2001
(73) Patentinhaber: EASTMAN KODAK COMPANY, Rochester, New York 14650 (US)
(72) Erfinder: Metzler, Patrick, Dr., 24214 Gettorf (DE); Peter, Karlheinz, Dr., 24113 Molfsee (DE)
(74) Vertreter: Weber, Etienne Nicolas

(56) Entgegenhaltungen:
- EP-A- 0 469 282
- US-A- 4 789 879
- US-A- 5 660 108
- US-A- 5 666 208

## Beschreibung

Die Erfindung betrifft ein Verfahren zur Einstellung des Registers bei einer Mehrfarbendruckmaschine mit mehreren Einrichtungen zur digitalen Erzeugung von Teilfarbenbildern, wobei die Druckergebnisse erfasst und zu einer derartigen Steuerung der Erzeugung der Teilfarbenbilder herangezogen werden, dass registerhaltige Drucke erzielt werden, und wobei eine Veränderung der Abmessungen der Drucksubstrate durch das einen Schöndruck beendende Fusen ermittelt wird, um diese Veränderung für eine erneute Bedruckung zu berücksichtigen.

Der Druck farbiger Darstellungen, insbesondere farbiger Bilder, erfolgt dadurch, dass mehrere Teilfarbenbilder übereinander gedruckt werden. Dies sind in der Regel die Farben Gelb, Magenta und Zyan sowie Schwarz. Bei Bedarf kommen noch Sonderfarben hinzu. Durch das Übereinanderdrucken dieser Farben lassen sich alle Farbkombinationen erzielen, wobei die Qualität der Drucke wesentlich von dem registerhaltigen Übereinanderdrucken der Teilfarbenbilder abhängt. Bei digitalen, beispielsweise elektrostatischen Druckverfahren wird die Registerhaltigkeit des Übereinanderdruckens dadurch erzielt, dass die Bilderzeugungseinrichtungen derart gesteuert werden, dass die Teilfarbenbilder bei der Übertragung auf ein Drucksubstrat registerhaltig aufeinander treffen.

Aus der EP 0 469 282 A2 ist ein Verfahren der eingangs genannten Art bekannt. Diese dienen beim Gegenstand dieses Standes der Technik dazu, Teilfarbenbilder eines Drucks, die separat gefust, also durch Aufschmelzen mit dem Papier verbunden werden, derart aufeinander abzustimmen, dass immer das nächste Teilfarbenbild registergenau auf das oder die bereits gefusten Teilfarbenbilder passt. Bei vielen Mehrfarbendruckmaschinen entfällt dieses Problem jedoch dadurch, dass alle Teilfarbenbilder gemeinsam gefust werden.

Des weiteren sind aus der US-A-4 789 879 und der EP-A-0 469 282 Verfahren der eingangs genannten Gattung bekannt, bei denen die Abmessungsanderungen des Drucksubstrates bei einem nächsten Schöndruck schon berücksichtigt wird, um durch diese Vorgabe ein Endresultat zu erzielen, bei dem der Druck (die Kopie) in seinen Abmessungen der Druckvorlage (dem Original) entspricht.

Der Erfindung liegt jedoch ein anders gelagertes Problem zugrunde. Es geht darum , dass ein Drucksubstrat beidseitig, also im Schön- und Widerdruck bedruckt werden soll. Für ein sauberes Aussehen der Drucke ist es dabei erforderlich, dass der Schöndruck und der Widerdruck deckungsgleich auf dem Drucksubstrat liegen, anderenfalls würde der Bildbereich des einen Drucks, der nicht deckungsgleich mit dem andern Druck ist, durch das Drucksubstrat durchschimmern. Da der Schöndruck vor Vornahme des Widerdrucks fertiggestellt sein muss, tritt auch hier das Problem auf, dass sich durch das Fusen die Substratgröße und damit in entsprechender Weise die Bildgröße verändert. Wären also Schön- und Widerdruck bei der Übertragung auf das Drucksubstrat gleich groß, ließe sich wegen der Abmessungsveränderungen keine Deckungsgleichheit erzielen.

Der Erfindung liegt die Aufgabe zugrunde, ein Verfahren und eine Vorrichtung der eingangs genannten Art derart auszugestalten, dass eine Deckungsgleichheit von Schön- und Widerdruck erzielbar ist.

Die Aufgabe wird durch die Merkmale des Anspruchs 1 gelöst,

Durch die Erfindung ist es möglich, eine exakte Deckungsgleichheit von Schön und Widerdruck zu erzielen. Dadurch lässt sich beispielsweise für Farbkopierer ein Qualitätsanspruch im Bereich des Schön- und Widerdrucks erzielen, der bisher nicht erreicht werden konnte. Da eine Registersteuerung für die digitale Erzeugung der Teilfarbenbilder ohnehin vorhanden ist, erfordert die erfindungsgemäße Maßnahme oftmals lediglich eine entsprechende Einrichtung vorhandener Steuerungen. Auch als Sensoren zur Erfassung der Abmessungen des Schöndrucks können oftmals ohnehin vorhandene Sensoren eingesetzt werden. Durch die Erfindung lässt sich also oftmals ohne viel Aufwand und daher sehr wirtschaftlich eine wesentliche Qualitätsverbesserung erzielen.

Die Ermittlung der Abmessungsveränderungen des Schöndrucks von der Übertragung auf das Drucksubstrat bis zur Fertigstellung des Schöndrucks können auf verschiedene Weise vorgenommen werden. So ist es möglich, Werte aus Bilddateien oder Erfahrungswerte heranzuziehen oder unmittelbar die Abmessungen der Bildfläche zu messen oder auf andere Weise zu ermitteln, es ist jedoch auch möglich, dass die Abmessungen des Drucksubstrats bis zur Bedruckung und nach Fertigstellung des Schöndrucks als korrelierende Maße für die Veränderungen der Abmessungen des Schöndrucks herangezogen werden.

Eine Ausgestaltung der Erfindung sieht vor, dass die Veränderungen der Abmessungen des Schöndrucks von der Übertragung auf das Drucksubstrat bis zur Fertigstellung des Schöndrucks ermittelt werden. Es kann dabei auch vorgesehen sein, dass die Abmessungen des Drucksubstrats bis zur Bedruckung und nach Fertigstellung des Schöndrucks als korrelierende Maße für die Veränderungen der Abmessungen des Schöndrucks erfasst werden.

Eine vorteilhafte Ausgestaltung sieht vor, dass die Abmessungen des Schöndrucks nach dem Fusen ermittelt und mit den Abmessungen der digital erzeugten Teilfarbenbilder des Schöndrucks verglichen werden, wobei die Veränderungen der Abmessungen für die Steuerung der digitalen Erzeugung der Teilfarbenbilder des Widerdrucks herangezogen werden. Der Vorteil besteht darin, dass die Daten der Abmessungen der digital erzeugten Teilfarbenbilder des Schöndrucks ohnehin vorhanden sind und es daher nur noch erforderlich ist, die Abmessungen des fertigen Schöndrucks zu ermitteln. Die Abmessungen der digital erzeugten Teilfarbenbilder können Bilddateien entnommen werden, welche in einem Speicher abgelegt sind. Ein solcher Speicher mit Bilddateien für die Steuerung der Herstellung der Drucke ist an einer Maschine ohnehin vorhanden und es ist daher die einfachste Lösung, auf diese Bilddateien zurückzugreifen.

Zur Erfassung der Veränderungen der Abmessungen können sowohl die Breiten des Schöndrucks als auch die Längen oder beide Maße erfasst werden. Bezüglich der Vorrichtung ist dann vorgesehen, dass mindestens ein Sensor zur Erfassung dieser Maße entsprechend angeordnet ist. Wird nur eines der Maße erfasst, so ist es möglich, dass aus einer zuvor ermittelten Beziehung zwischen Längen- und Breitenverändening die andere Abmessung berechnet wird. Bezüglich der Vorrichtung muss dann die Steuerung entsprechend ausgebildet sein, um diese Berechnung vorzunehmen.

Da ein Drucksubstrat bei einer normalen Maschinenausgestaltung nach dem Schöndruck gewendet und erneut den Druckwerken zugeführt werden muss, sieht eine zweckmäßige Ausgestaltung vor, dass vor einer erneuten Zuführung des Drucksubstrats eine Messung der Lage des Schöndrucks vorgenommen wird, um auch eine Lageverschiebung des Schöndrucks für die Steuerung der Erzeugung der Teilfarbenbilder des Widerdrucks zur Erzielung der Deckungsgleichheit zu berücksichtigen. Auf diese Weise wird sichergestellt, dass die Deckungsgleichheit trotz einer Wendung und erneuter Zuführung erzielt werden kann, selbst wenn es zu einer Lageverschiebung, z.B. zu einem Fehler in der Winkelausrichtung des Drucksubstrats gekommen ist.

Die Erfindung wird nachfolgend anhand der Zeichnung erläutert. Es zeigen
- **Fig. 1**: ein Ausfiihnmgsbeispiel der Erfindung und
- **Fig. 2**: ein Beispiel für eine Erfassung von Veränderungen von Abmessungen eines Drucksubstrats.

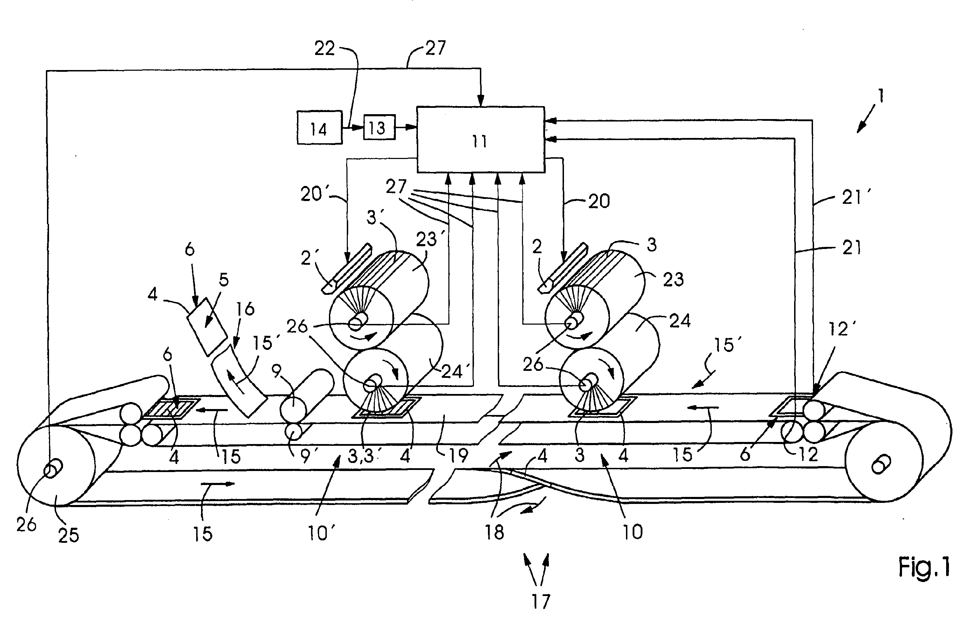

**Fig. 1** zeigt eine Mehrfarbendruckmaschine 1 mit Druckwerken 10, 10', ...Normalerweise verfügen Mehrfarbendruckmaschinen 1 über vier oder mehr Druckwerke, zur Vereinfachung wurden hier nur zwei Druckwerke 10, 10' dargestellt. Jedes dieser Druckwerke 10, 10', ... verfügt über eine Einrichtung 2, 2', ... zur digitalen Erzeugung von Teilfarbenbildern 3, 3', ... . Die Teilfarbenbilder 3, 3', ... werden auf Bildzylinder 23, 23', ... aufgebracht, von diesen auf Bildübertragungszylinder 24, 24', ... und von letzteren schließlich auf die Drucksubstrate 4 übertragen. Die Drucksubstrate 4 werden mittels eines Transportbandes 19 durch die Mehrfarbendruckmaschine 1 hindurchgeführt und nacheinander mit in der Regel vier Teilfarbenbilder 3, 3', ... versehen. Durch das Aufeinanderdrucken der Teilfarbenbilder 3, 3', ... mindestens der Grundfarbenlassen sich Bilder in fast allen Farben drucken.

Die Mehrfarbendruckmaschine 1 ist als Schön- und Widerdruckmaschine gebaut und verfügt daher über eine Wendeeinrichtung 17. In der Wendeeinrichtung 17 werden die Drucksubstrate 4 auf ihrem Rücktransport vom Ende des Transportbandes 19 zu dessen Anfang gewendet, wie dies durch die Pfeile 18 dargestellt ist. Dabei können Wendeeinrichtungen 17 auf verschiedenste Art und Weise ausgebildet sein, die Darstellung ist lediglich symbolisch. Drucksubstrate 4 werden dem Transportband 19 zugeführt, wie dies durch den rechten Pfeil 15' angedeutet ist. Beim ersten Durchlauf durch die Mehrfarbendruckmaschine 1 werden die Drucksubstrate 4 mit dem Schöndruck 6 versehen, bleiben bei der Weiche 16 auf dem Transportband 19 und werden über die Wendeeinrichtung 17 wieder dem Beginn des Transportbandes 19 zugeführt. Danach erhält die Rückseite der Drucksubstrate 4 den Widerdruck 5, der sich wie der Schöndruck 6 aus in der Regel vier Teilfarbenbildern 3, 3', ... zusammensetzt.

Am Ende eines jeden Durchlaufs durch die Mehrfarbendruckmaschine 1 passiert das Drucksubstrat 4 eine Fusereinrichtung 9, 9', die aus zwei Fuserrollen 9 und 9' besteht. Dort werden die meist als elektrostatisch anhaftendes Pulver aufgebrachten Teilfarbenbilder 3, 3', ... geschmolzen und damit fest mit dem Drucksubstrat 4 verbunden. Dieser Vorgang ist im wesentlichen dafür verantwortlich, daß sich die Abmessungen der Drucksubstrate 4 verändern und damit natürlich auch die Abmessungen 7, 8 des Schöndrucks 6, was zu dem der Erfindung zugrundeliegenden Problem führt. Deshalb ist es erforderlich, daß der Widerdruck 5 diesen Abmessungsveränderungen 7, 7', 8, 8' des Schöndrucks 6 angepaßt wird, damit Schöndruck 6 und Widerdruck 5 deckungsgleich auf dem Drucksubstrat 4 liegen und dadurch kein Durchscheinen des anderen Drucks 5 oder 6 im Bereich eines druckfreien Randes möglich ist.

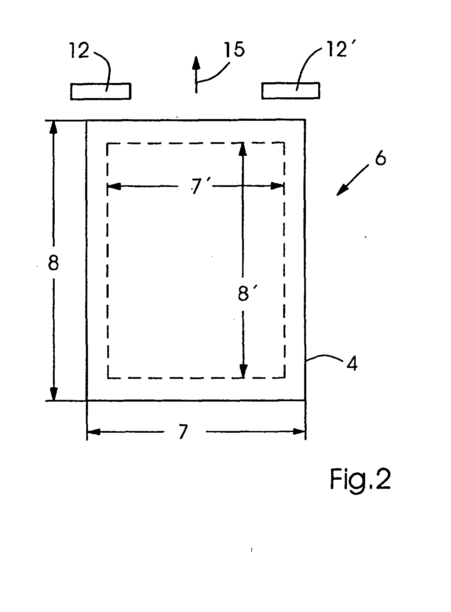

Diese Veränderungen der Abmessungen 7, 8 sind in **Fig. 2** dargestellt. Der Schöndruck 6 hatte bei der Übertragung auf das Drucksubstrat die Breite 7 und die Länge 8, welche beispielsweise durch das Fusen oder auch durch andere Behandlungen, verändert, in der Regel geschrumpft sind. Dadurch hat das Drucksubstrat 4 die Breite 7' und die Länge 8'. Diese Veränderungen der Abmessungen 7, 8, 7', 8' wird erfaßt, indem der Schöndruck 6 nach seiner Fertigstellung Sensoren 12 und 12' passiert, die diese Veränderungen registrieren.

Dabei ist es möglich, daß beispielsweise nur die Breite 7' erfaßt wird, um sie mit der ursprünglichen Breite 7 zu vergleichen, welche in Bilddateien 13 niedergelegt sind. Die Veränderung der Länge 8 zu 8' kann in ähnlicher Weise erfaßt werden, oder es ist möglich, sie durch eine Hinterlegung des Verhältnisses der Breiten- zur Längenänderung rechnerisch zu ermitteln. Es ist jedoch auch möglich, die Länge 8' dadurch zu ermitteln, daß die Antriebsrolle 25 des Transportbandes 19 mittels eines Drehwinkelgebers 26 in seinen Positionen erfaßt wird und durch diese Positionen die Sensoren 12 und 12' außer der Breite 7' auch die Länge 8' registrieren können. Selbstverständlich sind, wie eingangs bereits erwähnt, die unterschiedlichsten Möglichkeiten der Erfassung der Abmessungen 7, 8 beziehungsweise 7' und 8' möglich.

In der Darstellung der **Fig. 2** wurden die Breiten 7, 7' und die Längen 8, 8' dem Drucksubstrat 4 unmittelbar zugeordnet, es ist jedoch auch möglich diese Breiten 7, 7' und Längen 8, 8' als Abmessungen der Drucke des Schöndrucks 6 zu erfassen, wobei die Veränderungen durch Änderungen der Abmessungen des Drucksubstrats 4 bedingt sind und dadurch korrelieren. Es läßt sich also sowohl das eine wie das andere erfassen. Im dargestellten Ausführungsbeispiel ist es zum Beispiel so, daß das Drucksubstrat 4 ohne Rand völlig bedruckt ist und dadurch die Abmessungen 7, 8, 7', 8' des Schöndrucks 6 mit denen des Drucksubstrats 4 identisch sind.

In **Fig. 1** ist die Lage der Sensoren 12 und 12' am Beginn des Transportbandes 19 eingezeichnet. Diese Lage kann beliebig sein, sie muß lediglich hinter der Fusereinrichtung 9, 9' liegen, da diese hauptsächlich für die Abmessungsveränderungen 7, 8, 7', 8' verantwortlich ist. Die gezeichnete Position am Beginn des Transportbandes 19 hat den Vorteil, daß gleichzeitig mit den Abmessungsveränderungen durch die Sensoren 12, 12' erfaßt werden kann, ob es durch die Wendung 18 und den Rücktransport der Drucksubstrate 4 zu einer Positionsverschiebung oder -drehung gekommen ist.

Von den Sensoren 12, 12' werden die entsprechenden Messungen über die Verbindungen 21, 21' einer Steuerung 11 zugeführt. Eine derartige Steuerung 11 ist bei Druckmaschinen ohnehin vorhanden, sie dient dazu, die Erzeugung der Teilfarbenbilder 3, 3', ...durch die Einrichtungen 2, 2', ... derart zu steuern, daß die Teilfarbenbilder 3, 3', ... registergenau aufeinander zu liegen kommen. Eine Registersteuerung einer Mehrfarbendruckmaschine 1 kann beispielsweise darin bestehen, daß die Positionen der Bildzylinder 23, 23', ..., der Bildübertragungszylinder 24, 24', ... und der Antriebsrolle 25 des Transportbandes 19 dadurch erfaßt werden, daß diese jeweils Drehwinkelgeber 26 aufweisen. Die ermittelten Positionen werden durch Verbindungen 27 an die Steuerung 11 übermittelt. Die Registergenauigkeit läßt sich dann dadurch erzielen, daß immer die entsprechende Positionsübereinstimmung für die Erzeugung der Teilfarbenbilder 3, 3', ... mittels der Einrichtungen 2, 2', ... geregelt wird.

Diese Steuerung 11 übernimmt erfindungsgemäß auch die Berücksichtigung der Veränderung der Abmessungen 7, 8, 7', 8' des Schöndrucks 6 für die Erzeugung der Teilfarbenbilder 3, 3', ... des Widerdrucks 5, damit dieser genau deckungsgleich mit dem Schöndruck 6 ist. Dabei können beispielsweise die Abmessungen 7', 8' durch die Sensoren 12 und 12' erfaßt werden und die ursprünglichen Abmessungen 7, 8, aus Bilddateien 13 entnommen werden, die sich in einem Speicher 14 befinden. Ein derartiger Speicher 14 ist in der Regel vorhanden, um der Steuerung 11 alle Daten zur Verfügung zu stellen, die diese für einen Druckauftrag benötigt. Die Abmessungen 7, 8 der als Bilddatei 13 hinterlegten Teilfarbenbilder 3, 3' ... entspricht im wesentlichen den Abmessungen 7, 8 bei der Übertragung auf das Drucksubstrat 4. Gibt es dabei jedoch Abweichungen, können diese miteinberechnet werden, soweit sich derartige Abweichungen nicht dadurch eliminieren, daß sie beim Schöndruck 6 und beim Widerdruck 5 identisch auftreten.

Die Darstellung der Erfindung anhand des Ausführungsbeispiels ist selbstverständlich nur symbolisch und beispielhaft, da eine Druckmaschine auch völlig anders aufgebaut sein kann und die Anwendung der Erfindung von dem konkreten Aufbau einer Mehrfarbendruckmaschine 1 unabhängig ist.

### Bezugszeichenliste

- 1: Mehrfarbendruckmaschine
- 2, 2',...: Einrichtungen zur digitalen Erzeugung von Teilfarbenbildern
- 3,3',...: Teilfarbenbilder
- 4: Drucksubstrate
- 5: Widerdruck
- 6: Schöndruck
- 7, 8: Abmessungen des Schöndrucks bei der Übertragung auf das Drucksubstrat
- 7', 8': Abmessungen des Schöndrucks nach seiner Fertigstellung, z.B. nach dem Fusen
- 7, 7': Breiten des Schöndrucks
- 8, 8': Längen des Schöndrucks
- 9,9': Fusereinrichtung mit zwei Fuserrollen
- 10, 10', ...: Druckwerke
- 11: Steuerung
- 12,12': Sensor
- 13: Bilddateien
- 14: Speicher
- 15, 15': Pfeile: Transportrichtungen der Drucksubstrate
- 15: innerhalb der Druckmaschine
- 15': Zuführung und Abführung
- 16: Weiche
- 17: Wendeeinrichtung
- 18: Pfeile: Wendung der Drucksubstrate
- 19: Transportband für Drucksubstrate
- 20, 20': Verbindung der Steuerung mit den Einrichtungen zur Erzeugung der Teilfarbenbilder
- 21, 21: Verbindung der Sensoren mit der Steuerung
- 22: Verbindung Speicher-Steuerung
- 23, 23',...: Bildzylinder
- 24, 24', ...: Bildübertragungszylinder
- 25: Antriebsrolle
- 26: Drehwinkelgeber
- 27: Verbindung Drehwinkelgeber-Steuerung

## Patentansprüche

1. Verfahren zur Einstellung des Registers bei einer Mehrfarbendruckmaschine (1) mit mehreren Einrichtungen (2, 2', ...) zur digitalen Erzeugung von Teilfarbenbildern (3, 3', ...), wobei die Druckergebnisse erfaßt und zu einer derartigen Steuerung der Erzeugung der Teilfarbenbilder (3, 3', ...) herangezogen werden, dass registerhaltige Drucke erzielt werden, und wobei eine Veränderung der Abmessungen (7, 8, 7', 8') der Drucksubstrate (4) durch das einen Schöndruck beendende Fusen ermittelt wird, um diese Veränderung für eine erneute Bedruckung zu berücksichtigen,
**dadurch gekennzeichnet,**
**dass** die Veränderungen der Abmessungen (7, 8, 7', 8') des Schöndrucks (6) von der Übertragung der Teilfarbenbilder (3, 3',...) auf das Drucksubstrat (4) bis zur Fertigstellung des Schöndrucks (6) durch die Fusen ermittelt und dazu herangezogen werden, die digitale Erzeugung der Teilfarbenbilder (3, 3', ...) für den Widerdruck (5) derart zu steuern, dass er nach dem Druck deckungsgleich mit dem Schöndruck (6) ist, indem den Veränderungen der Abmessungen (7, 8, 7', 8') **dadurch** Rechnung getragen wird, dass der Zeilenabstand der Bildzeilen und/oder die Zeilenlänge der Teilfarbenbilder (3, 3', ...) auf Bildzylindern (23, 23', ...) für den Widerdruck (5) zur Erzielung der Deckungsgleichheit geändert werden.

2. Verfahren nach Anspruch 1,
**dadurch gekennzeichnet,**
**dass** die Abmessungen des Drucksubstrats (4) bis zur Bedruckung und nach Fertigstellung des Schöndrucks (6) als korrelierende Maße für die Veränderungen der Abmessungen (7, 8, 7', 8') des Schöndrucks (6) herangezogen werden.

3. Verfahren nach Anspruch 2,
**dadurch gekennzeichnet,**
**dass** die Abmessungen (7, 8) aus den Bilddateien (13) entnommen werden.

4. Verfahren nach einem der Ansprüche I bis 3,
**dadurch gekennzeichnet,**
**dass** die Breiten (7, 7') des Schöndrucks (6) erfasst werden.

5. Verfahren nach einem der Ansprüche 1 bis 4,
**dadurch gekennzeichnet,**
**dass** die Längen (8, 8') des Schöndrucks (6) erfasst werden.

6. Verfahren nach Anspruch 4 oder 5,
**dadurch gekennzeichnet,**
**dass** eine Abmessung (7 oder 8) gemessen und die andere Abmessung (8 oder 7) aus einer zuvor ermittelten Beziehung zwischen Längen- und Breitenveränderung berechnet wird.

7. Verfahren nach einem der Ansprüche 1 bis 6,
**dadurch gekennzeichnet,**
**dass** vor einer erneuten Zuführung eines Drucksubstrats (4) zu den Druckwerken (10, 10', ...) eine Messung der Lage des Schöndrucks (6) vorgenommen wird, um auch eine Lagerverschiebung des Schöndrucks (6) für die Steuerung der Erzeugung der Teilfarbenbilder (3, 3', ...) des Widerdrucks (5) zur Erzielung der Deckungsgleichheit zu berücksichtigen.

## Claims

1. Method for adjusting the register in a multi-color printing machine (1) comprising several devices (2, 2', ...) to digitally generate color separation images (3, 3', ...), whereby the printing results are detected and used for a control of the generation of the color separation images (3, 3', ...) such that registered prints are obtained, and whereby a change of the dimensions (7, 8, 7', 8') of the printing substrates (4) is defined by the fusing operation that completes recto-printing in order to take into consideration this change for renewed printing,
**characterized in that**
the changes of the dimensions (7, 8, 7',8') of the recto print (6) from the transfer of the color separation images (3, 3',...) to the printing substrate (4) up to the completion of the recto print (6) by the fusing operation are determined and used to control the digital generation of the color separation images (3, 3', ...) for the verso print (5) in such a manner that, following the printing operation, said verso print is in register with the recto print (6) **in that** the changes of the dimensions (7, 8, 7', 8') are taken into account in that the line spacing between the image lines and/or the line length of the color separation images (3, 3', ...) on the image cylinders (23, 23', ...) are changed for the verso print (5) in order to achieve registration.

2. Method as in Claim 1,
**characterized in that**
the dimensions of the printing substrate (4) up to the printing and following the completion of the recto print (6) are used as correlating parameters for changes of the dimensions (7, 8, 7', 8') of the recto print (6).

3. Method as in Claim 2,
**characterized in that**
the dimensions (7, 8) are taken from the image files (13).

4. Method as in one of Claims 1 through 3,
**characterized in that**
the widths (7, 7') of the recto print (6) are detected.

5. Method as in one of Claims 1 through 4,
**characterized in that**
the lengths (8, 8') of the recto print (6) are detected.

6. Method as in Claim 4 or 5,
**characterized in that**
one dimension (7 or 8) is measured and the other dimension (8 or 7) of a previously determined relationship between the length and width changes is computed.

7. Method as in one of Claims 1 through 6,
**characterized in that**,
before another printing substrate (4) is fed to the printing units (10, 10', ...), a measurement of the position of the recto print (6) is performed in order to also take into consideration a positional change of the recto print (6) for the control of the generation of the color separation images (3, 3', ...) of the verso print (5) in order to achieve registration.

## Revendications

1. Procédé de réglage du registre d'une imprimante à plusieurs couleurs (1) avec plusieurs dispositifs (2, 2', ...) de génération numérique d'images partielles en couleur (3, 3', ...), les produits d'impression étant enregistrés et utilisés pour commander la génération des images partielles en couleur (3, 3', ...) de façon à obtenir des imprimés contenant le registre, une variation des dimensions (7, 8, 7', 8') des supports d'impression (4) étant déterminée par la fusion qui termine l'impression au recto pour tenir compte de cette variation pour une nouvelle impression,
**caractérisé en ce que**
la variation des dimensions (7,8,7',8') de l'impression au recto (6) est déterminée par les fusions entre le transfert des images partielles en couleur (3, 3' ...) vers le support d'impression (4) jusqu'à la finition de l'impression au recto (6) et utilisée pour commander la génération numérique des images partielles en couleur (3, 3', ...) pour l'impression au verso (5) de sorte qu'il coïncide parfaitement avec l'impression au recto (6) après cette opération compte tenu des variations des dimensions (7, 8, 7', 8') et du fait que l'écartement entre les lignes et/ou la longueur des lignes des images partielles en couleur (3, 3', ...) est modifié sur les tambours d'image (23, 23', ...) pour l'impression au verso (5) de façon à obtenir la coïncidence avec l'impression au recto.

2. Procédé selon la revendication 1,
**caractérisé en ce que**
les dimensions du support d'impression (4) sont utilisées, jusqu'à l'impression et après l'impression au recto (6), comme dimensions de corrélation pour la variation des dimensions (7, 8, 7', 8') de l'impression au recto (6).

3. Procédé selon la revendication 2,
**caractérisé en ce que**
les dimensions (7, 8) sont prélevées des fichiers d'image (13).

4. Procédé selon l'une quelconque des revendications 1 à 3,
**caractérisé par**
l'acquisition des largeurs (7, 7') de l'impression au recto (6).

5. Procédé selon l'une quelconque des revendications 1 à 4,
**caractérisé par**
l'acquisition des longueurs (8, 8') de l'impression au recto (6).

6. Procédé selon la revendication 4 ou 5,
**caractérisé en ce que**
l'une des deux dimensions (7 ou 8) est mesurée, tandis que l'autre (8 ou 7) est calculée à partir d'une relation déterminée entre la variation longitudinale et transversale.

7. Procédé selon l'une quelconque des revendications 1 à 6,
**caractérisé en ce que**
le système effectue des mesures de position de l'impression au recto (6) avant d'amener un nouveau support d'impression (4) dans l'imprimante (10, 10', ...) pour tenir compte d'un décalage de l'impression au recto (6) pour commander la génération des images partielles en couleur (3, 3', ...) de l'impression au verso (5) afin d'obtenir sa coïncidence avec l'impression au recto (6).
